# EUROPEAN PATENT APPLICATION

(11) **EP 4 641 467 A1**
(43) Date of publication of application: **29.10.2025**
(21) Application number: 24213084.7
(22) Date of filing: 14.11.2024
(51) Int. Cl.: G06Q 30/0202, G06Q 30/0242

(54) **DIGITAL FORECASTER**

(30) Priority: 24.04.2024 US 202418644737
(71) Applicant: NBCUniversal Media, LLC, New York, NY 10112 (US)
(72) Inventor: BARR, Thomas J., New York, 10112 (US); ESTULIN, Boris, New York, 10112 (US); DAVIS, Robert, New York, 10112 (US)
(74) Representative: Keltie LLP

(57) **Abstract**

Systems and methods are provided for efficient computer-implemented forecasting of audience and/or audience demand for supplemental digital content. Specifically, an efficient target segment data structure is used with universe data to identify a viewership supply forecast. The forecast may be used to control downstream forecast dependent systems and / or services.

## Description

### BACKGROUND

The present disclosure relates generally to digital content and more specifically to techniques that may be utilized when forecasting audience impressions associated with one or more targeted audiences and when forecasting audience capacity after accounting for audience demand.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In media and entertainment, advertisers want to target content to audiences with specific characteristics. These audience characteristics may include demographics, past purchases, product preferences, personal interests, etc. When purchasing ads, advertisers may set requirements that include viewer characteristics corresponding to such segments and a number of impressions, including unique impressions. "Unique impressions" refers to the number of users or households that have seen the ad, as opposed to total impressions, which is a number of times the ad has been seen. In other words, a single user or household seeing the same ad twice is equal to one unique impression and two total impressions.

Publishers and content presenters who deliver content with advertising to viewers may have information on segments of viewers (or audience segments) that can be targeted. For example, a publisher may have a segment coffee drinkers with 30 million viewers and a segment viewers between the ages of 25-54 with 84 million viewers. If an advertiser requests to target coffee drinkers and viewers between the ages of 25-54, a publisher may be tempted to add the total viewers from both segments and promise the advertiser the ability to target 114 million unique viewers. However, this summation does not consider the overlap of the two segments in which some of the coffee drinkers may also comprise some of the viewers between the ages of 25-54. A failure to consider the overlap would mean that the publisher is unable to deliver the 114 million unique viewers to the advertiser, requiring the publisher to make good on the shortfall by offering the advertiser additional ad inventory at little to no cost.

Additionally, there may be overlap between identifiers utilized in the sense that multiple identifiers may correspond to the same individual or household. For example, a single user or household may include multiple different types of identifiers included in the audience, such as a first party identifier (e.g., an identifier associated with a streaming service, such as a user profile or username used on the streaming service), a device identifier, and an Internet Protocol (IP) address. Thus, a particular segment, such as the one defined by the audience with the age between 25-54, may include multiple identifiers corresponding to a single user or single household, which can lead to overestimating the number of impressions.

Furthermore, advertisers may want ads to be provided with particular content (e.g., a particular show distributed or consumed via a particular manner, such as via television (e.g., cable) or online), while other advertisers either do not set such requirements or set certain other types of requirements (e.g., only purchasing ads presented during a particular show). Thus, some advertisers potentially wanting particular audience segments to see advertisements while watching programming while other advertisers may not creates complexities in determining which ads are shown when and to whom. In other words, in addition to identifying various identifier types, determining various audience segments, and determining unique users or households in the audience segments, there is still a complex problem dealing with fulfilling advertiser requirements in a finite amount of available advertisement space.

Given the factors discussed above, as well as the size of the segments (e.g., millions or tens of millions of viewers and/or entries), current techniques may require days if not at least one week to estimate viewers or unique impressions future advertisements could have. A need exists to perform this estimation more quickly and accurately.

### BRIEF DESCRIPTION

According to at least one aspect of the present invention, a tangible, non-transitory, computer-readable medium, includes computer-readable instructions that, when executed by one or more processors of one or more computers, cause the one or more computers to: generate a target segment data structure indicative of a target segment within a universe of audience members of a content provision service; generate a reach time series indicating a number of unique impressions of the target segment for each of a set of periodic intervals for a historical period, by intersecting a subset of the universe of audience members that viewed content of a content provision service at each of the periodic intervals with the target segment data structure; and generate a supply forecast indicating an estimated number of future impressions based upon the reach time series.

In some embodiments of this aspect, the instructions, when executed by one or more processors of one or more computers, cause the one or more computers to receive audience data indicative of the universe of audience members over the periodic intervals for the historical period of time, and generate a universe data structure associated with an indication of the magnitude of the subset of the universe of audience members that viewed content of the content provision service for each of the periodic intervals, wherein the universe data structure comprises a hyperloglog (HLL) data structure, generated by applying a hash function to the audience data, the HLL comprising uniformly distributed binary outputs of the hash function. In such embodiments, the universe data structure may comprise a plurality of HLL data structures, one for each of a plurality of segments of the audience data.

In further embodiments of this aspect, the instructions, when executed by one or more processors of one or more computers, cause the one or more computers to receive audience data indicative of the universe of audience members over the periodic intervals for the historical period of time, and generate a universe data structure associated with an indication of the magnitude of the subset of the universe of audience members that viewed content of the content provision service for each of the periodic intervals, wherein the universe data structure comprises a hyperloglog (HLL) data structure, generated by applying a hash function to the audience data, the HLL comprising uniformly distributed binary outputs of the hash function, the universe data structure comprises a plurality of HLL data structures, one for each of a plurality of segments of the audience data, and the instructions, when executed by one or more processors of one or more computers, cause the one or more computers to de-duplicate elements of the universe data structure by categorizing audience elements into separate HLLs based upon an audience identifier type identifying a corresponding audience member, and limiting each of the audience elements having a plurality of audience identifier types to one of the separate HLLs, based upon a priority of audience identifier types. In such embodiments, the priority of audience identifier types may comprise a prioritization of a content provision service identifier used to access content over a device identifier of an electronic device used to access content, or a prioritization of a device identifier of an electronic device used to access content over an internet protocol (IP) address identifier used to access the content.

In some embodiments of this aspect, the instructions, when executed by one or more processors of one or more computers, cause the one or more computers to generate a demand forecast of the target segment, indicating an estimated demand of future impressions corresponding to the target segment, identify a remaining capacity corresponding to the target segment based upon the demand forecast of the target segment, and provide the remaining capacity corresponding to the target segment to an order management system, causing the order management system to limit ordering based upon the remaining capacity corresponding to the target segment. In such embodiments, the instructions, when executed by one or more processors of one or more computers, may cause the one or more computers to generate the demand forecast, by: recursively calculating a capacity corresponding to the target segment, by introducing an impact of probabilistic placements for other audiences at each recursive step, until each audience in the universe of audience members is considered. In embodiments where this is the case, the impact of probabilistic placements for the other audiences may be determined based upon a relative demand of each of the other audiences with respect to one another and the target segment.

In further embodiments of this aspect, the instructions, when executed by one or more processors of one or more computers, cause the one or more computers to identify one or more time-dependent trends occurring within a lookback period of time within the reach time series, and forecast the estimated number of future impressions, based upon the one or more time-dependent trends. In such embodiments, the lookback period of time may comprise a minimum of two years.

In yet further embodiments of this aspect, the periodic intervals comprise a daily interval.

According to a second aspect of the present invention, a computer-implemented method, includes: generating, via the computer, a target segment hyperloglog data structure (HLL) indicative of a target segment within a universe of audience members; generating, via the computer, a reach time series indicating a number of unique impressions of the target segment for each historical period, by intersecting: a subset segment of the universe that viewed content of a content provision service for each of a set of periodic intervals for a historical period of time with the target segment HLL; and generating, via the computer, a supply forecast indicating an estimated number of future impressions based upon the reach time series. It is to be appreciated that where applicable, this aspect of the invention may be combined with any of the modifications described above with respect to the first aspect of the invention.

In some embodiments of this aspect, the method further comprises receiving, via the computer, audience data indicative of the universe of audience members over the periodic intervals for the historical period of time, generating, via the computer, a universe data structure comprising a plurality of hyperloglog data structures (HLLs), generated by applying a hash function to the audience data, each of the plurality of HLLs comprising uniformly distributed binary outputs of the hash function associated with an indication of a first magnitude of a subset segment of the universe of audience members that viewed content of the content provision service for each of the periodic intervals, de-duplicating the universe data structure to remove duplicated audience members by categorizing audience elements into separate HLLs based upon an audience identifier type identifying a corresponding audience member, and limiting each of the audience elements having a plurality of audience identifier types to one of the separate HLLs, based upon a priority of audience identifier types, and generating the reach time series using the de-duplicated universe data structure. In such embodiments, the priority of audience identifier types may comprise a prioritization of a content provision service identifier used to access content over a device identifier of an electronic device used to access content, and a prioritization of the device identifier over an internet protocol (IP) address identifier used to access the content.

In some embodiments of this aspect, the method further comprises generating, via the computer, a demand forecast of the target segment, indicating an estimated demand of future impressions corresponding to the target segment, wherein the demand forecast is generated by recursively calculating a capacity corresponding to the target segment, by introducing an impact of probabilistic placements for other audiences at each recursive step, until each audience in the universe of audience members is considered, wherein the impact of probabilistic placements for the other audiences is determined based upon a relative demand of each of the other audiences with respect to one another and the target segment, identifying, via the computer, a remaining capacity corresponding to the target segment based upon the demand forecast of the target segment, and providing, via the computer, the remaining capacity corresponding to the target segment to an order management system, causing the order management system to limit ordering based upon the remaining capacity corresponding to the target segment.

In further embodiments of this aspect, the method further comprises identifying, via the computer, one or more time-dependent trends occurring within a lookback period of time within the reach time series, and forecasting, via the computer, the estimated number of future impressions, based upon the one or more time-dependent trends.

According to a third aspect of the present invention, a system, includes: a forecast controlled computing device; and a transactional digital forecaster, comprising one or more computer processors, configured to: generate and provide a supply forecast indicating an estimated number of future impressions based upon a reach time series indicating a number of unique impressions of a target segment for each of a set of periodic intervals for a historical period, wherein the reach time series is generated by intersecting a subset of a universe of audience members that viewed content of a content provision service at each of the periodic intervals for the historical period with a target segment within the universe; and cause forecast control of the forecasted controlled computing device, by providing the supply forecast to the forecast controlled computing device. It is to be appreciated that where applicable, this aspect of the invention may be combined with any of the modifications described above with respect to the first and second aspects of the invention.

In some embodiments of this aspect, the one or more computer processors of the transactional digital forecaster are configured to generate a universe data structure associated with a magnitude of the subset of the universe of audience members that viewed the content of the content provision service for each of the periodic intervals, wherein the universe data structure comprises a plurality of hyperloglog data structures (HLLs), generated by applying a hash function to audience data, each of the plurality of HLLs comprising uniformly distributed binary outputs of the hash function and is associated with an indication of a first magnitude of a subset segment of the universe of audience members that viewed the content of the content provision service for the set of periodic intervals, and de-duplicate the universe data structure to remove duplicated audience members, by categorizing audience elements into separate HLLs based upon an audience identifier type identifying a corresponding audience member, and limiting each of the audience elements having a plurality of audience identifier types to one of the separate HLLs, based upon a priority of audience identifier types, and generating the reach time series using the de-duplicated universe data structure.

In further embodiments of this aspect, the transactional digital forecaster is configured to generate and provide a demand forecast for a target segment to the forecast controlled computing device, and the forecast controlled computing device comprises an order management system, configured to receive the supply forecast and the demand forecast and limit ordering based upon both the supply forecast and the demand forecast.

According to a fourth aspect of the present invention, a tangible, non-transitory, computer-readable medium, includes computer-readable instructions that, when executed by one or more processors of one or more computers, cause the one or more computers to: generate a target segment data structure indicative of a target segment within a universe of audience members of a content provision service; generate a reach time series indicating a number of unique impressions of the target segment for each of a set of periodic intervals for a historical period, by intersecting a subset of the universe of audience members that viewed content of the content provision service at each of the periodic intervals with the target segment data structure; and generate a supply forecast indicating an estimated number of future impressions based upon the reach time series. It is to be appreciated that where applicable, this aspect of the invention may be combined with any of the modifications described above with respect to any of the above aspects of the invention.

In some embodiments of this aspect, the instructions, when executed by one or more processors of one or more computers, cause the one or more computers to receive audience data indicative of the universe of audience members over the periodic intervals for the historical period of time, and generate a universe data structure associated with an indication of the magnitude of the subset of the universe of audience members that viewed content of the content provision service for each of the periodic intervals, wherein the universe data structure comprises a hyperloglog (HLL) data structure, generated by applying a hash function to the audience data, the HLL comprising uniformly distributed binary outputs of the hash function. In such embodiments, the universe data structure may comprise a plurality of HLL data structures, one for each of a plurality of segments of the audience data.

In further embodiments of this aspect, the instructions, when executed by one or more processors of one or more computers, cause the one or more computers to receive audience data indicative of the universe of audience members over the periodic intervals for the historical period of time, and generate a universe data structure associated with an indication of the magnitude of the subset of the universe of audience members that viewed content of the content provision service for each of the periodic intervals, wherein the universe data structure comprises a hyperloglog (HLL) data structure, generated by applying a hash function to the audience data, the HLL comprising uniformly distributed binary outputs of the hash function, the universe data structure comprises a plurality of HLL data structures, one for each of a plurality of segments of the audience data, and the instructions, when executed by one or more processors of one or more computers, cause the one or more computers to de-duplicate elements of the universe data structure by categorizing audience elements into separate HLLs based upon an audience identifier type identifying a corresponding audience member, and limiting each of the audience elements having a plurality of audience identifier types to one of the separate HLLs, based upon a priority of audience identifier types and wherein the instructions, when executed by one or more processors of one or more computers, cause the one or more computers to generate the reach time series using the de-duplicated universe data structure. In such embodiments, the priority of audience identifier types may comprise a prioritization of a content provision service identifier used to access content over a device identifier of an electronic device used to access content, or a prioritization of a device identifier of an electronic device used to access content over an internet protocol (IP) address identifier used to access the content.

In some embodiments of this aspect, the instructions, when executed by one or more processors of one or more computers, cause the one or more computers to generate a demand forecast of the target segment, indicating an estimated demand of future impressions corresponding to the target segment, identify a remaining capacity corresponding to the target segment based upon the demand forecast of the target segment, and provide the remaining capacity corresponding to the target segment to an order management system, causing the order management system to limit ordering based upon the remaining capacity corresponding to the target segment. In such embodiments, the instructions, when executed by one or more processors of one or more computers, may cause the one or more computers to generate the demand forecast, by: recursively calculating a capacity corresponding to the target segment, by introducing an impact of probabilistic placements for other audiences at each recursive step, until each audience in the universe of audience members is considered. In embodiments where this is the case, the impact of probabilistic placements for the other audiences may be determined based upon a relative demand of each of the other audiences with respect to one another and the target segment.

In further embodiments of this aspect, the instructions, when executed by one or more processors of one or more computers, cause the one or more computers to identify one or more time-dependent trends occurring within a lookback period of time within the reach time series, and forecast the estimated number of future impressions, based upon the one or more time-dependent trends. In such embodiments, the lookback period of time may comprise a minimum of two years.

In yet further embodiments of this aspect, the periodic intervals comprise a daily interval.

According to a fifth aspect of the present invention, a computer-implemented method, includes: generating, via the computer, a target segment data structure indicative of a magnitude of a target segment within a universe of audience members of a content provision service; generating, via the computer, a reach time series indicating a number of unique impressions of the target segment for each of a set of periodic intervals for a historical period, by intersecting: a subset of the universe of audience members that viewed content of the content provision service for each of the periodic intervals with the target segment data structure; and generating, via the computer, a supply forecast indicating an estimated number of future impressions based upon the reach time series. It is to be appreciated that where applicable, this aspect of the invention may be combined with any of the modifications described above with respect to any of the above aspects of the invention.

According to a sixth aspect of the present invention, a system, includes: a transactional digital forecaster, comprising one or more computer processors, configured to: generate a target segment data structure indicative of a magnitude of a target segment within a universe of audience members of a content provision service and generate a supply forecast indicating an estimated number of future impressions based upon a reach time series indicating a number of unique impressions of the target segment for each of a set of periodic intervals for a historical period, wherein the reach time series is generated by intersecting a subset of the universe of audience members that viewed content of the content provision service at each of the periodic intervals for the historical period with the target segment data structure within the universe. It is to be appreciated that where applicable, this aspect of the invention may be combined with any of the modifications described above with respect to any of the previous aspects of the invention.

In some embodiments of this aspect, the system further comprises a forecast controlled computing device and wherein the transactional digital forecaster is configured to cause forecast control of the forecasted controlled computing device, by providing the supply forecast to the forecast controlled computing device, and further configured to generate and provide a demand forecast for the target segment to the forecast controlled computing device, and the forecast controlled computing device comprises an order management system, configured to receive the supply forecast and the demand forecast and limit ordering based upon both the supply forecast and the demand forecast.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings. The patent or application file contains at least one drawing executed in color. Copies of this patent or patent application publication with color drawing(s) will be provided by the Office upon request and payment of the necessary fee.
FIG. 1 is a block diagram of a system that forecasts availability and controls order management using efficient data structures, in accordance with one or more embodiments of the present disclosure;
FIG. 2 is a flow diagram of a process for setting avail caps in an order management system, in accordance with one or more embodiments of the present disclosure;
FIG. 3 is a flow diagram of a process for forecasting unique and total impressions, in accordance with one or more embodiments of the present disclosure; and
FIG. 4 illustrates generation of HLLs and constructing an aggregated universe data structure, in accordance with one or more embodiments of the present disclosure;
FIG. 5 illustrates de-duplication of the universe to account for overlap identities, in accordance with one or more embodiments of the present disclosure;
FIG. 6 illustrates generation of a target segment HLL, in accordance with one or more embodiments of the present disclosure;
FIGS. 7-9 illustrate generation of a reach time series, in accordance with one or more embodiments of the present disclosure;
FIG. 10 illustrates generation of a unique impressions/capacity forecast, in accordance with one or more embodiments of the present disclosure;
FIG. 11 illustrates a process for determining a demand that impacts the forecasted capacity, in accordance with one or more embodiments of the present disclosure;
FIGS. 12-15 illustrate an example of demand calculation, in accordance with one or more embodiments of the present disclosure; and
FIGS. 16-17 illustrate an example of Order Management System GUI control based upon forecasted avails, in accordance with one or more embodiments of the present disclosure.

### DETAILED DESCRIPTION

One or more specific embodiments of the present disclosure will be described below. These described embodiments are only examples of the presently disclosed techniques. Additionally, in an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but may nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

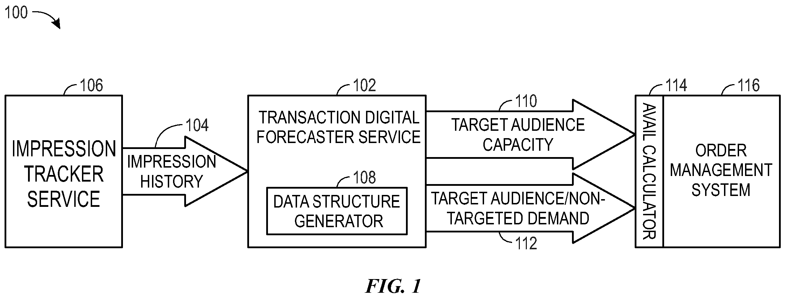

Turning now to the drawings, FIG. 1 is a block diagram of a system 100 configured to manage data regarding audience segments, forecast audience impressions based on one or more target audience segments, and estimate capacity for supplemental content (e.g., advertisements) to be viewed by one or more audience segments. The estimated capacity may be used to employ ordering caps with respect to supplemental content ordering.

Specifically, as illustrated, the system 100 includes a transaction digital forecaster service 102 that receives impression history 104 from an impression tracker service 106. For example, the impression tracker service 106 may include an advertisement service that provides advertisements within digital content streams based upon advertisement orders and advertisement placing rules. The impression history 104 may include a historical indication of particular advertisement placements and associated viewer information associated with the placed advertisements, such as viewer segments (e.g., targeted demographic groups of viewers).

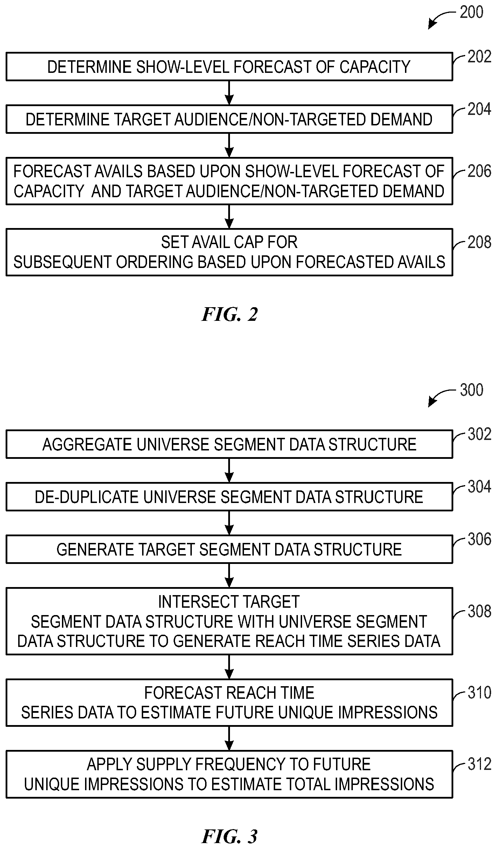

The transactional digital forecaster service 102 may be used to forecast available audience capacity for provision of content ("avails") for shows across a network show schedule. FIG. 2 illustrates a process 200 for forecasting avails. For clarity, FIG. 2 will be discussed in conjunction with FIG. 1.

As illustrated in FIG. 1, the transaction digital forecaster service 102 may periodically receive the impression history 104 and use a data structure generator 108 to generate efficient forecasting data structures that, as will be discussed in detail below, enable rapid forecasting (e.g., within hours, minutes, or seconds) of advertisement placement capacity at a show level for a complex show schedule involving a significant number of shows (e.g., tens, hundreds, or thousands of shows) for target audiences (block 202 of FIG. 2). For example, data structure generator 108 may implement a Hyperloglog algorithm to generate the hyperloglogs (HLLs), which are data structures that enable the size estimation of corresponding segments. In particular, the Hyperloglog algorithm may be used to estimate the number of elements in a set. For instance, in the Hyperlog algorithm, a hash function may be applied to elements in a dataset (e.g., identifiers associated with users or user devices) to generate one or more of the HLLs, which may include uniformly distributed binary outputs of the hash function. As such, the HLLs may be data structures that enable the estimation of the number of unique people, users, devices, households, or other units within the segments of the impression history 104. Each segment of the impression history 104 may have a corresponding HLL (of the HLLs), providing rapidly produced estimates of a subset of a universe of viewers associated with a period of time within the impression history 104. Thus, the transaction digital forecaster service 102 may efficiently and effectively provide a forecasted target audience capacity 110 for future show schedules on a periodic basis (e.g., multiple times a day), resulting in more up-to-date forecasting than traditional techniques can provide.

In addition to the target audience capacity 110, a target audience/non-targeted demand 112 may be determined (block 204 of FIG. 2). As will be discussed in detail below, the target audience/non-targeted demand 112 may indicate existing demand (e.g., orders) for placements associated with particular viewer segments (e.g., target audiences) along with untargeted demand (e.g., orders) that is not associated with particular segments (e.g., ordered advertisement placements that do not have to target a particular viewer segment).

Using the target audience capacity 110 and the target audience/non-targeted demand 112, an avail calculator 114 (e.g., computer-implemented instructions executed by one or more computer processors) may determine the avails (block 206). In the illustrated embodiment of FIG. 1, the avail calculator is illustrated as a component of the order management system 116 that is used to facilitate advertisement impression ordering with respect to future advertisement placements. In some embodiments, the avail calculator 114 may be a component of the transaction digital forecaster service 102. In such embodiments, the forecasted avails may be provided in addition to the order management system 116 in combination with and/or in lieu of the target audience capacity 110 and/or target audience/non-targeted demand 112.

To calculate the show-level avails, the determined target audience/non-targeted demand 112 can be subtracted from the target audience capacity 110, indicating a remaining portion of capacity for additional ordering with respect to the target audiences and/or for untargeted placements. To account for targeted segment restrictions, the target audience demand may be subtracted from the target audience capacity, while the non-targeted demand may be subtracted from any forecasted available capacity.

As illustrated in FIG. 2, an avail cap may be set for subsequent ordering based upon the forecasted avails (block 208). For example, the order management system 116 may cause a graphical user interface (GLTI) to display the forecasted avails and may cause the GUI to disable functionality to order impressions greater than the avail cap (e.g., the forecasted avails and/or a threshold set based at least in part upon the forecasted avails).

### Capacity Forecasting

Turning now to a more detailed discussion of forecasting the target audience capacity 110, (e.g., block 202 of FIG. 2), FIGS. 3-10 provide illustrations of the capacity forecasting process. Starting with FIG. 3, FIG. 3 illustrates a process 300 for capacity forecasting.

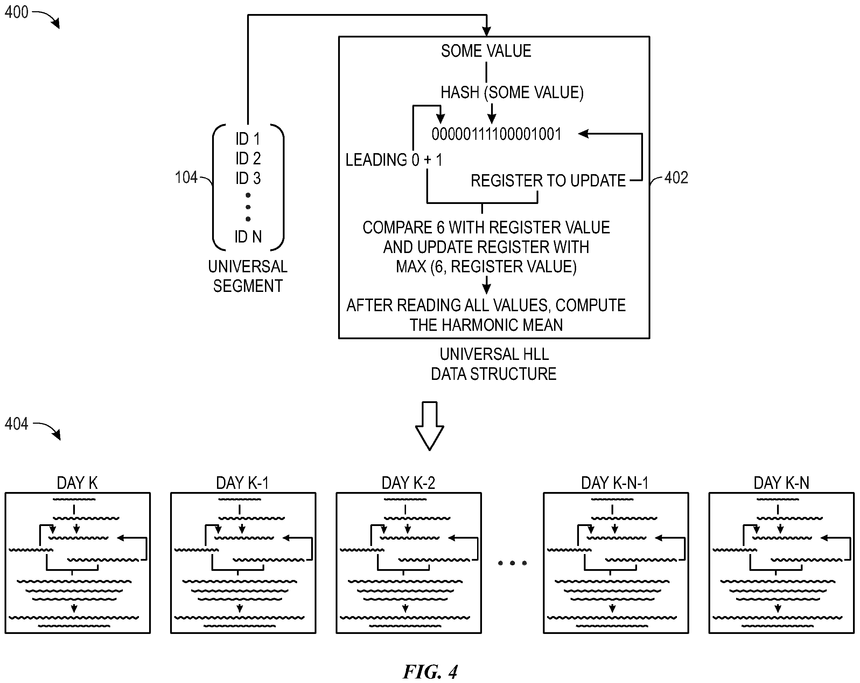

The process 300 begins with aggregating received impression history 104 into universe segment data that provides an indicated estimate of an entire universe of viewers spanning the impression history 104 (block 302). FIG. 4 provides an illustration 400 of the universe HLL aggregation of block 302. Specifically, as mentioned above, an impression history 104 may be received, which includes identifiers of viewers for the associated periodic interval. A universe HLL 402, may be generated to provide an efficient estimate of all viewers of the periodic interval (e.g., a particular day) that is indicated by identifiers found in the received impression history 104. At the recurring periodic intervals, new impression history 104 may be received and new universe HLLs 402 for these periodic intervals may be generated. Each universe HLL may be aggregated, thus generating a universe HLL series 404, extending from a most recent period (e.g., Day k) back to a look-back period (e.g., Day k-n for a look-back period of n+1 days).

Due to the nature of the identifiers provided in the impression history 104, the universe HLLs 402, in some cases, may include multiple indications of a particular viewer based upon multiple identifier types for the particular viewer being present within the impression history 104. For example, there may be identifiers using usernames or accounts associated with a service (e.g., customers of a cable service or streaming service), identifiers using device identifiers (e.g., identifiers identifying a particular device used to consume digital content), identifiers using IP addresses, etc. These identifiers may refer to the same viewers and, thus, may cause a duplicate historical impression when multiple identifiers associated with a particular user are counted as unique impressions. For example, if an account identifier and a device identifier and/or an IP identifier is known for one user or household, then utilizing each of the universe HLLs may result in the same user being counted multiple times.

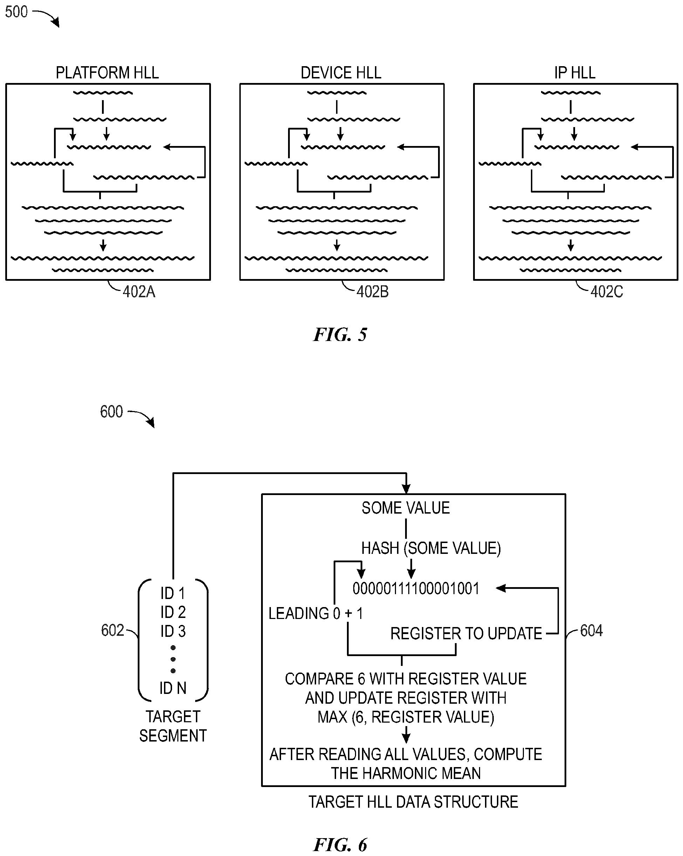

As illustrated in FIG. 5, for efficiency, the universe HLL 402 may be split into sub-universe HLLs (e.g., represented by 402A-402C). Specifically, the split may provide impression estimates for particular viewer identifiers based upon the identifier types present in the impression history 104. In the example of FIG. 5, three sub-universe HLLs are generated, based upon three identifier types being present in the impression history 104. Specifically, a platform identifier (e.g., a user name and/or account identifier of a platform presenting the advertisement) may be used to generate a platform HLL 402A. Device identifiers identifying devices used to view the advertisement may be used to generate the Device HLL 402B. IP addresses corresponding to the location/device where the advertisement is received/played back can be used to generate the IP HLL 402C.

To help reduce the occurrence of overcounting, process 300 includes de-duplicating the universe segment data, providing only one of the duplicative identifiers for representation in the sub-universe HLLs (block 304). In particular, in one embodiment, the different types of identifiers may be given different priorities, and identifiers of lower priorities may be disregarded. Priorities, in some embodiments, may be set based upon the granularity/detail that they provide. For example, IP addresses may change frequently and there is typically only one IP address associated with an entire household's internet connection. In contrast, a device identifier is typically static and the device, in some cases may be associated with a particular viewer. Thus, a device identifier may provide more granular information than an IP address and, thus, may be prioritized over IP addresses as an identifier type. Further, a platform identifier (e.g., a user name associated with a platform providing the content) may provide a granular indication of a particular viewer. Thus, the platform identifier may be prioritized over a device identifier. Thus, user or account identifiers may be given a higher priority than device identifiers, which may be assigned a higher priority than IP address identifiers. Following this example, if a user or account identifier as well as a device identifier are known for a particular user, the user or account identifier (or the count of such an identifier as represented in the universe HLL for the account identifiers) would be used, while the device identifier associated with the user would be disregarded. In this manner, each of the identifiers accounted for by the universe HLLs may be more likely to be unique. In other words, overlap between HLLs (and thus, overrepresenting the number of users) may be reduced.

Returning to FIG. 3, the process 300 continues by generating target segment data (block 306). FIG. 6 provides an illustration 600 of generating the target segment data structure. Specifically, the impression history 104 may include an indication 602 of identifiers that match a target segment, The identifiers provided in the indication 602 may be used to generate a target HLL data structure 604 that provides an efficient estimate of the number of viewers in the target segment that is indicated by the impression history 104.

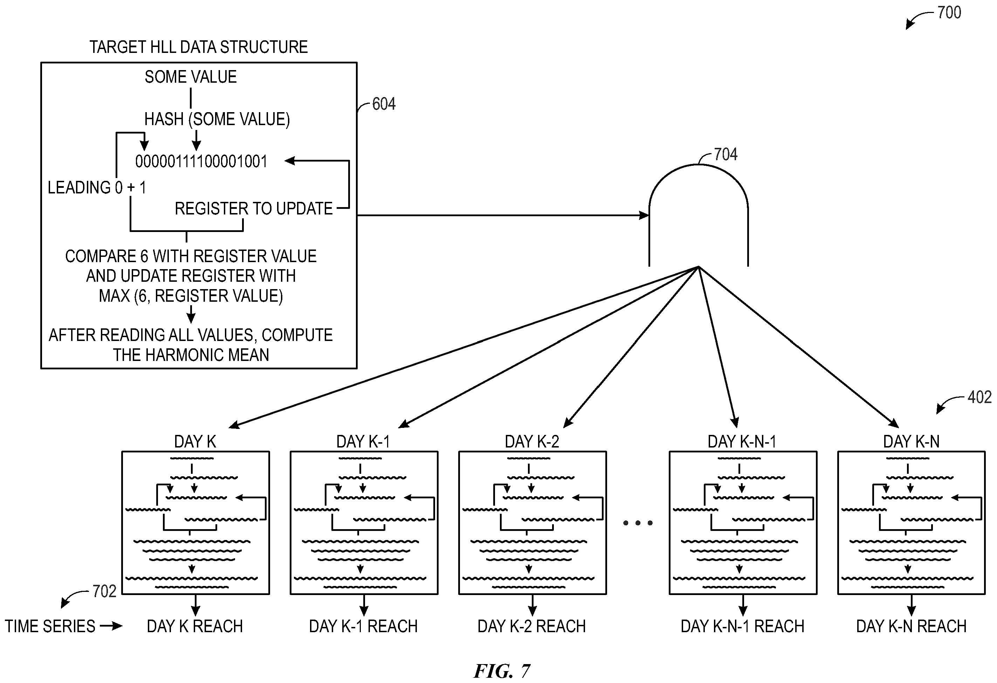

The process 300 may then generate reach time series data by intersecting the target segment data structure with the universe segment data structure (block 308). FIG. 7 provides an illustration 700 of generating the reach time series 702. As illustrated, the target segment HLL 604 is in intersected 704 with the universe segment HLLs 402. This intersection results in a reach time series 702 that indicates an estimated total number of unique target segment viewers over each of the periodic intervals back to the look-back period. Although FIG. 7 illustrates each universe segment HLL having a one-day interval, other interval lengths greater than or less than a day may be used.

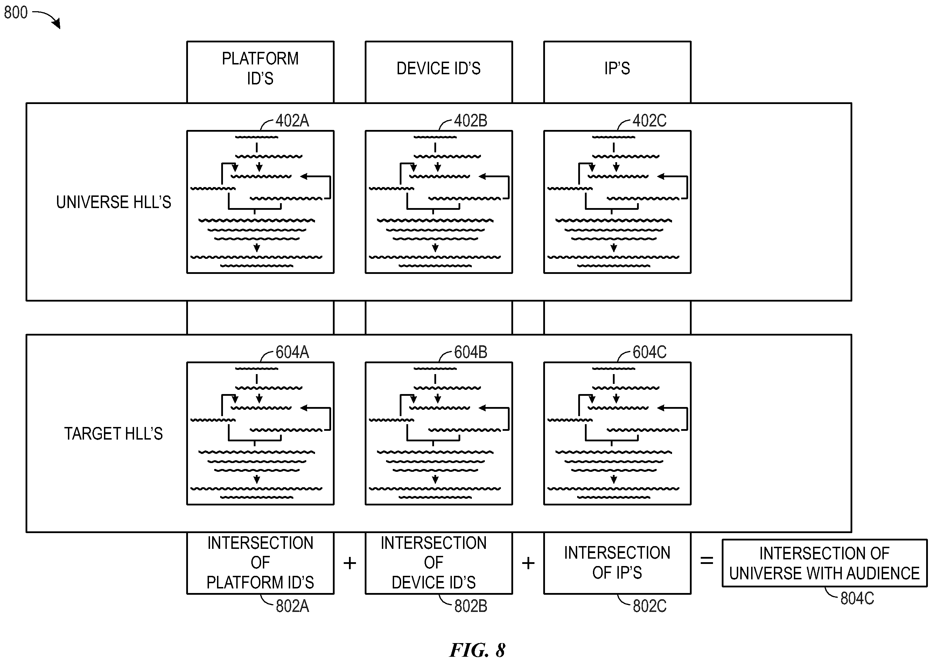

In embodiments, where the universe HLL 402 is split into sub-universe HLLs (e.g., 402A-402C), block 308 may be performed for each sub-universe HLL, as depicted by the illustration 800 of FIG. 8. Continuing with the de-duplication example of FIG. 5, the universe HLL 402 is split into duplicated Platform HLL 402A, Device HLL 402B, and IP HLL 402C. The target HLL 604, may be split into corresponding sub-target HLLs 604A-604C. The sub-universe HLLs 402A-402C may be intersected with their corresponding sub-target HLLs, resulting in sub-intersections 802A-802C. The union of these sub-intersections 802A-802C provides the intersection of the universe with the targeted audience (e.g., the reach time series 702).

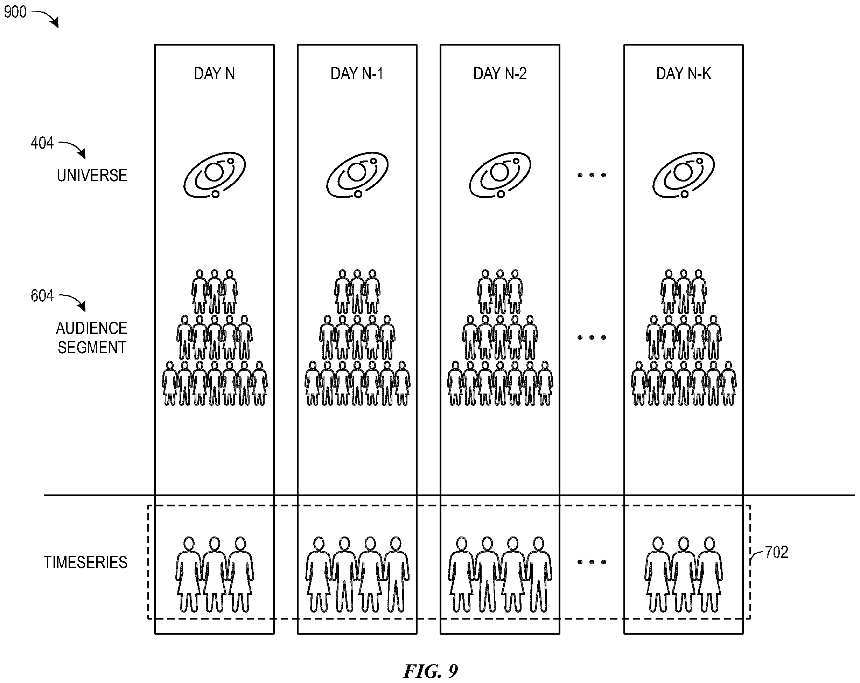

To help provide more context, FIG. 9 provides another illustration 900 of the generation of the reach time series 702 over a period of time (e.g., from day *n* to day *n-k*). For each day (or another time period), the universe HLLs 404 may be intersected with the target HLLs 604 for audience segments of that corresponding day to generate the reach time series 702. In other words, each daily "universe" in FIG. 8 may be representative of the universe HLLs for a particular day, and such universe HLLs may be intersected with target HLLs 604 of audience segments (represented by the "audience segment" for each day in FIG. 9) to generate the reach time series 702 for the corresponding day. As such, the reach time series 702 generated may include a numerical value for each day indicative of the amount of people, households, or devices that viewed or accessed the advertisement on a particular day.

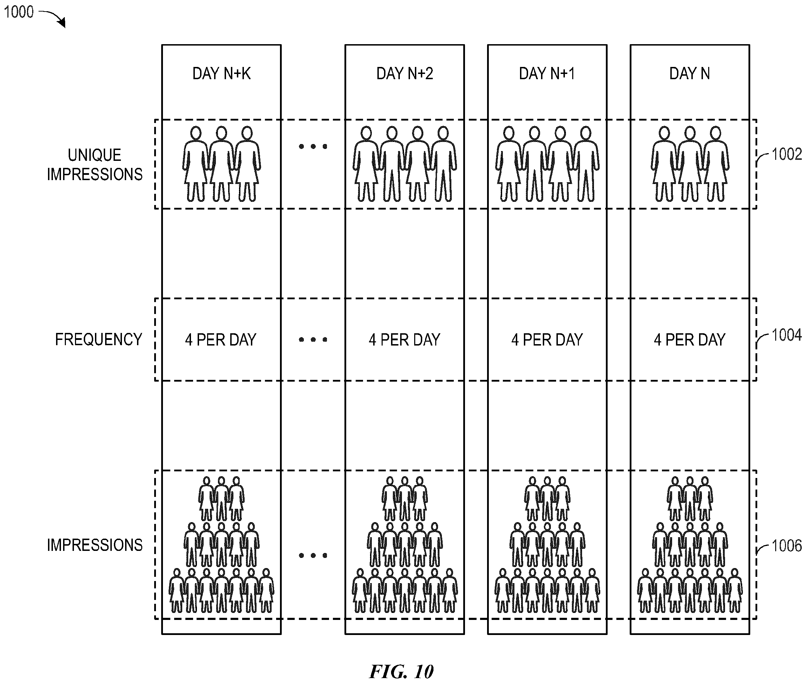

Referring back to FIG. 3, at block 310, once the reach time series is identified, a forecast of future impressions may be identified. For example, forecasting models may be applied to the reach time series 702 to generate estimated impressions for future periodic intervals (e.g., days). For example, FIG. 10 provides an illustration 1000 of generating unique impression/capacity estimates, where a periodic interval (e.g., daily) forecast 1002 of unique impressions is determined. In the illustrated example, the forecast 1002 provides a number of predicted unique impressions for a number of days (e.g., for days n to n+k), based upon a forecasting model applied to the reach time series 702.

Once the future unique impressions are forecasted, a supply frequency value may be applied to (e.g., multiplied by) the forecasted future unique impression to forecast a number of total impressions for future periodic intervals (e.g., days) (block 312). The frequency may be a value (integer or decimal) corresponding to the number of different pieces of supplemental content that a user may be predicted to view per day. The value of the frequency may depend on a number of factors. Those factors may include the day of the week or the month, the content unit, and/or the audience segment. For example, one content unit with a longer airtime may have a higher frequency relative to another content unit with a shorter airtime. Thus, the transaction digital forecaster service 102 (or other component) may dynamically determine the frequency based on these factors. As illustrated in FIG. 10, the frequency 1004 is multiplied by the unique impressions 1002 on a daily basis to derive the daily total impression forecasts 1006.

### Demand Forecasting

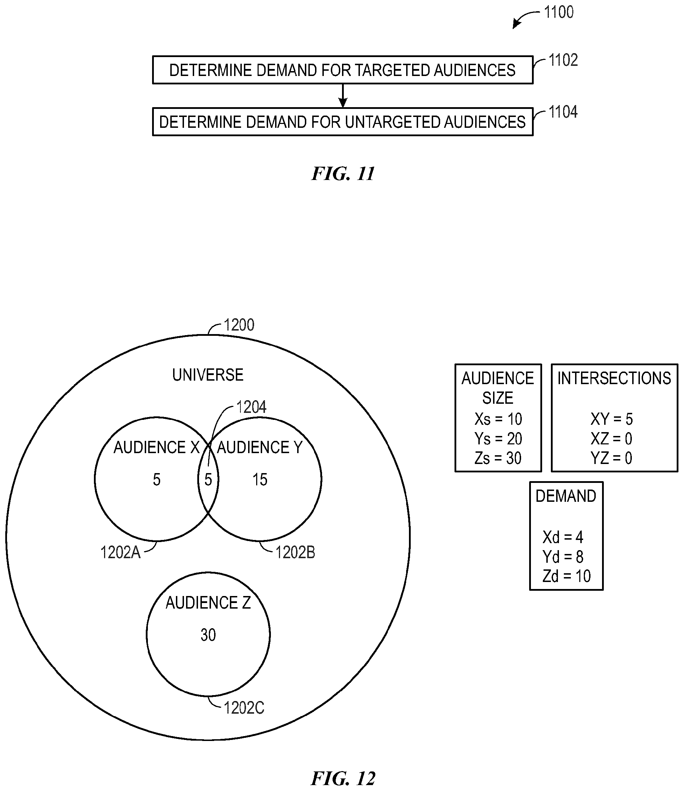

As mentioned above with respect to process 200 of FIG. 2, current advertisement orders may impact available impressions. Thus, the following discussion provides a detailed discussion of demand forecasting and its impact on forecasted avails. FIG. 11 provides a process 1100 for determining demand for advertisements, which may reduce the forecasted avails available for future ordering.

As mentioned above, ordered advertisement impressions may be targeted or untargeted. When targeted advertisement impressions are ordered, the order specifies that the advertisement impressions are to be distributed to one or more particular target audience segments, during playback of one or more particular pieces of primary content, or both to one or more particular target audience segments and during playback of one or more pieces of particular primary content. For example, a company wishing to advertise to a particular group of people may request a particular number of impressions (total or unique) of an advertisement to one or more target audience groups (and potentially also during a particular episode of a particular show). Conversely, untargeted advertisement impressions occur when the order does not specify a target audience segment or particular piece of primary content that should be targeted for presentation.

To determine the demand for advertisements that may reduce the forecasted avails available for ordering, the system 100 may determine demand for targeted audiences (block 1102).

To determine the demand for targeted content, the segment manger 16 may perform an iterative process for each of the target audience segments. To help illustrate, an example is discussed below with respect to FIGS. 12-15.

FIG. 12 depicts a universe 1200 and three audience segments 1202 (referring collectively to segment 1202A (e.g., "Audience X"), segment 1202B (e.g., "Audience Y"), and segment 1202C (e.g., "Audience Z")) within the universe 1200. Additionally, an overlap 1204 is formed by portions of the segment 1202A and the segment 1202B. FIG. 12 also indicates a size of each of the segments 1202. For instance, the segment 1202A includes ten people, the segment 1202B includes twenty people, and the segment 1202C includes thirty people. The overlap 1204 includes five people, as indicated by "XY" beneath "Intersections." As also indicated in FIG. 12, there are demands for each of the segments, with the segment 1202A having a demand of four, the segment 1202B having a demand of eight, and the segment 1202C having a demand of ten. As discussed below, the iterative process may determine the remaining size (e.g., capacity) of each segment 1202 after accounting for the demand for each segment 1202 (which may be known based on orders or agreements from or with advertisers) and the overlap between the segments 1202, such as the overlap 1204.

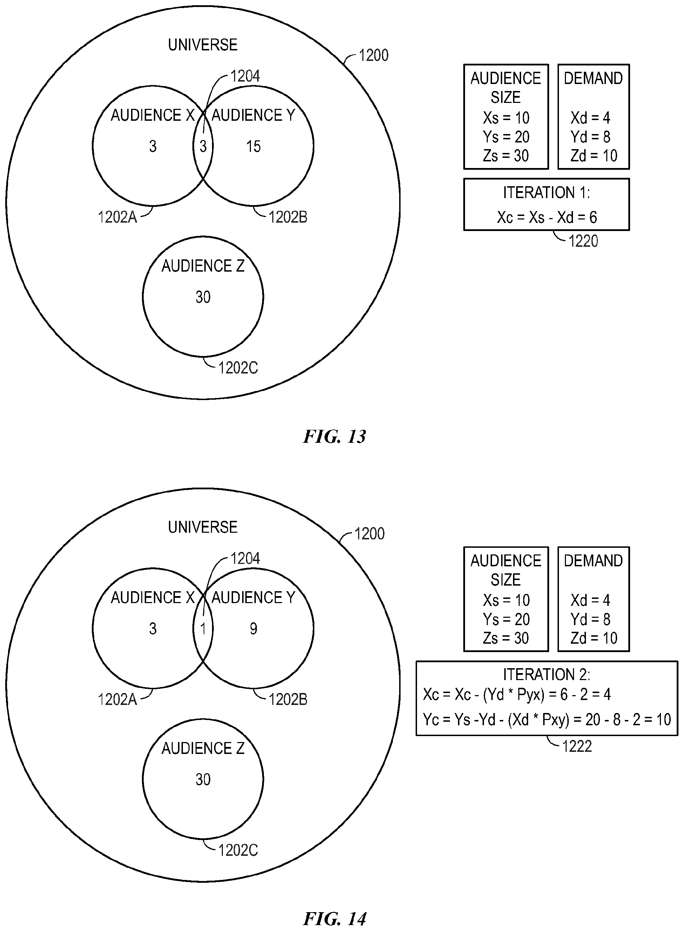

In each iteration, an additional segment may be considered. Indeed, FIG. 13 illustrates a first iteration (e.g., iteration 1220) in which the segment 1202A is considered. When considering an audience segment, the size of the segment and the size of the overlap with other segments may be considered. For example, in the context of FIG. 13 (and FIG. 12 above), the ratio of members of the segment 202A that are also members of another segment (e.g., segment 1202B) to the total number of members of the segment is five to ten, or 50%. Thus, when considering how the demand among the segment 1202A will be met (e.g., from a probabilistic viewpoint), half of the demand for the segment 1202A will be met by people who are not only members of the segment 1202A. For instance, as illustrated in FIG. 7, the values of the segment 1202A and the overlap 1204 have each been reduced from five (in FIG. 12) to three. This is partially indicated by the iteration 1220, in which the capacity of the segment 1202A is equal to the difference of the size (e.g., ten) of the segment 1202A and the demand (e.g., four) for the segment 1202A. Thus, to account for the demand of the segment 1202A, the capacity of the segment 1202A (e.g., "Xc") may be modified. As more iterations of are performed, the values of the capacities of the segments 1202 may continue to be modified to account for the demands of additional segments 1202 being considered.

Continuing to FIG. 14, in a second iteration 1222, the segment 1202B may be considered. Somewhat similar to the iteration 1220 of FIG. 13, the ratio of members of both the segment 1202A and the segment 1202B to the total members of the segment 1202B may be taken into account. In this example, the value of such a ratio is five to twenty, or 25% (which is obtained by dividing the five members of the overlap 204 (as shown in FIG. 6) by the size (e.g., "Ys") of the segment 202B, which is twenty. Because there is overlap between the segment 1202A and the segment 1202B, members of the overlap 1204 may be selected to fulfill the demand of the second segment 1202B. Indeed, as depicted by the iteration 1222, the capacity of the first segment 1202A (e.g., "Xc") may be equal to a difference of an earlier capacity (e.g., the capacity in the first iteration 1220, or six) and a product of the ratio mentioned above (e.g., one-fourth) and the demand of the second segment 1202B (e.g., eight). Thus, the resulting capacity of the first segment 1202A may be four, with two members of the segment 1202A that are also members of the segment 1202B being utilized to account for the demand for the second segment (which is the why the value inside the overlap 1204 has changed from "3" in FIG. 7 to "1" in FIG. 8).

For the second segment 1202B, the size of the second segment 1202B, demand of the second segment 1202B, and overlap with other segments (e.g., segment 1202A) may be considered. For instance, as depicted in the iteration 1222, the capacity of the second segment 1202B (e.g., "Yc") may be adjusted to account for the demand (e.g., "Yd," which is equal to eight) being satisfied using people who are only members as well as the demand of the segment 1202A being satisfied using people who are also members of the segment 1202B (as indicated by "Xd * Pxy," which is the demand for the segment 1202A multiplied by the ratio of members of the overlap 204 to the members of the segment 1202A (which is equal to four times one-half, or two)).

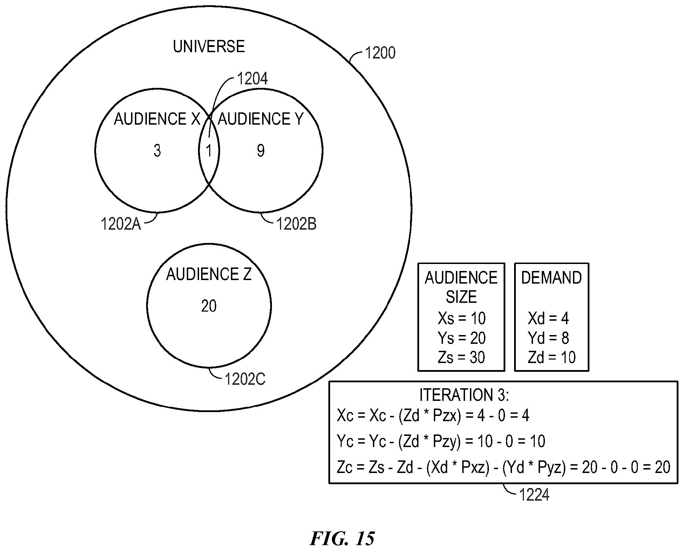

Continuing to FIG. 15, which includes a third iteration 1224, another segment (e.g., segment 1202C) may be considered. As illustrated in the iteration 1224 and FIG. 15, overlap between the segment 1202C may be taken into account (e.g., as indicated by multiplication operations involving the demand of the segment 1202C (e.g., "Zd") and probabilities (e.g., "Pzx" and "Pzy") which may be respective ratios of the overlaps of the segment 1202C with the segment 1202A and the 1202B to the total number of members of the segment 1202C. However, as there is no overlap among other segments, these values are zero. Accordingly, the capacities of the segment 1202A and the segment 1202B remain the same as determined in the second iteration 1222. Additionally, the demand for the third segment 1202C may be accounted for wholly using people who are only members of the third segment 1202C. Thus as can be seen comparing FIG. 14 to FIG. 15, the capacity of the third segment 1202C has changed from thirty to twenty.

In this manner, the capacity for audience segments may be determined by accounting for targeted audience demand, and as explained below, the adjusted audience capacities may be utilized to determine availability of impressions for ordering. It should be reiterated that this may be done for each unit of primary content where advertisements may be placed, enabling demand calculations specific to each particular piece of primary content. Additionally, for targeted supplemental content that is not specific to a particular piece of primary content, the demand may be satisfied using the remaining capacities (e.g., of a particular segment) in any primary content. Thus, the iterative process described above with respect to FIGS. 12-15 above may be utilized for supplemental content that is not specific to a particular primary content placement. Moreover, while the example context above discussed above with respect to FIGS. 12-15 includes three audience segments 1202, more (e.g., tens, hundreds, thousands) of segments may be accounted for in other embodiments. Additionally, segments 1202 may overlap with more than one other segment 1202, and such overlap may be taken into account in a manner generally similar to discussion above.

Having discussed targeted demand, the discussion now turns to untargeted demand. As mentioned above, some orders do not specify a particular target audience segment or target primary content for placement. Thus, these placements may be more flexible and may be placed with any available audience and/or primary content. However, these placements still reduce the avails and should be accounted for. Thus, the process 1100 also includes determining demand for untargeted content (block 1104). To do so, the system 100 may perform an iterative process generally similar to the process discussed above with respect to FIGS. 12-15 except that the probability of a member of the universe (e.g., universe 1200) also being a member of any one or more of the segments 1202 is accounted for, as the untargeted demand could impact any one or none of the target audience segments 1202 when placed. Thus, to account for untargeted demand, a capacity of the universe 1200 may be decreased by a product of the untargeted demand (e.g., the number of (unique) impressions for supplemental content and a ratio, with the ratio being equal to the size of the segments 1202 (e.g., sixty (determined by adding ten, twenty, and thirty)) divided by the total size of the universe 1200. In other words, the ratio may be a probability of a member of the universe 1200 being a member of at least one of the segments 1202.

### Avail Forecasting

As mentioned above with respect to FIG. 2, once the forecasted capacity and demand are determined, avails may be forecasted. Referring briefly to FIG. 15, in the context of the example illustrated therein, the availability for each segment 1202 may be the value of the corresponding capacity for the segment 1202 (as determined after performing the iteration 1224). Thus, there may be an availability determined for each of the segments 1202. To determine a universe availability for a content unit, the system 100 may determine the difference between capacity of the universe and the demand of the universe. Moreover, the availability determined may also include an availability for all content units (e.g., to indicative how many more impressions there could be across an entire platform or for all content units). To do so, the system 100 may aggregate the availability for each content unit.

### Order Management

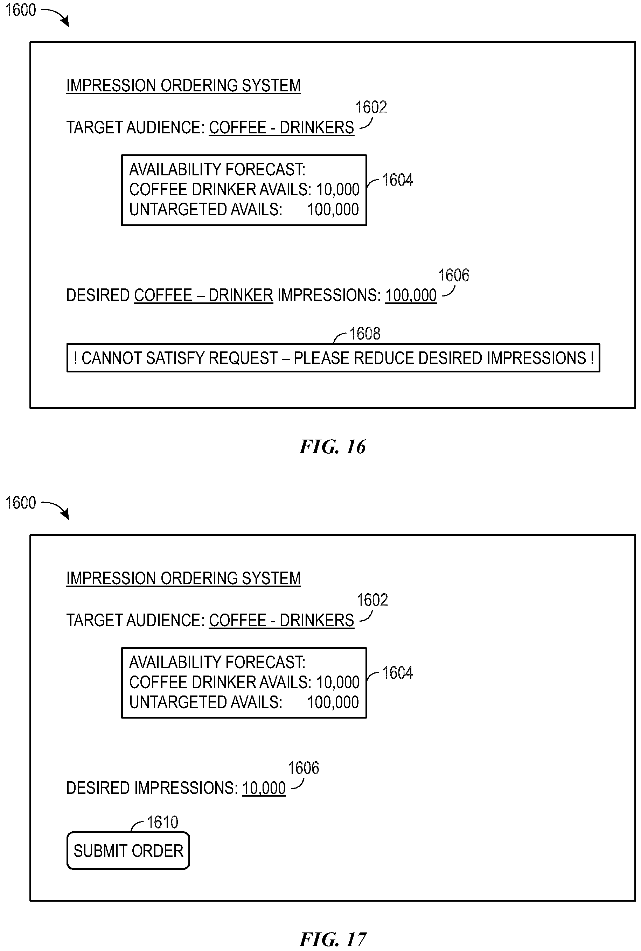

FIGS. 16 and 17 illustrate examples of Order Management graphical user interface 1600 control that utilizes the forecasted avails generated by the techniques described herein.

In FIG. 16, the GUI 1602 provides an affordance 1604 for selecting a target audience segment for an advertisement order. Here, an advertiser has set the target audience to coffee drinkers.

An availability forecast section 1604 provides forecasted availability for the target audience. Additionally, in the current example, an untargeted availability is also provided. These forecasts provide an indication to the advertiser as to how many impressions may be available for purchase.

A desired impressions affordance 1606 enables the advertiser to select a number of desired impressions for their order. As discussed above, an avail cap may be set based upon the availability forecasts. In other words, the number of desired impressions for the order may be capped to the forecasted availability or within a threshold of the forecasted availability Here, the advertiser enters a number that is outside the avail cap. Accordingly, the GUI 1600 may remove or refrain from rendering an order submission affordance that enables the advertiser to submit the order. Indeed, in the current example, the GUI 1600 displays a graphical alert 1608 indicating that the avail cap has been exceeded (e.g., in lieu of the order submission affordance).

In FIG. 17, the desired impressions affordance 1606 is changed by the advertiser to not exceed the avail cap. Thus, the graphical alert 1608 is withdrawn (e.g., refrained from rendering) and the order submission affordance 1610. Thus, the advertiser is able to submit the order.

By utilizing the techniques described herein, accurate estimations of the availability of supplemental content may be achieved in a relatively fast manner (e.g., one hour or two hours compared to days or weeks). Indeed, as described above, the number of impressions (e.g., unique or total impressions) that supplemental content may have can be forecasted in a manner that accounts for different identifiers potentially being associated with the same user, household, or device. Additionally, by using HLLs to represent viewers, privacy concerns may be alleviated, as the hashing in the HLLs obfuscate any ability to identify viewers. This may also increase the ability to retain historical impression data, avoiding data retention regulations pertaining to personally identifiable data, thus enabling extended look-back periods that provide better forecasting.

While only certain features of the disclosure have been illustrated and described herein, many modifications and changes will occur to those skilled in the art. It is, therefore, to be understood that the appended claims are intended to cover all such modifications and changes as fall within the true spirit of the disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function] ... " or "step for [perform]ing [a function] ... ", it is intended that such elements are to be interpreted under 35 U.S.C. 112(f). However, for any claims containing elements designated in any other manner, it is intended that such elements are not to be interpreted under 35 U.S.C. 112(f).

## Claims

1. A tangible, non-transitory, computer-readable medium, comprising computer-readable instructions that, when executed by one or more processors of one or more computers, cause the one or more computers to:
generate a target segment data structure indicative of a magnitude of a target segment within a universe of audience members (1200) of a content provision service;
generate a reach time series (702) indicating a number of unique impressions of the target segment for each of a set of periodic intervals for a historical period, by intersecting a subset of the universe of audience members (1200) that viewed content of the content provision service at each of the periodic intervals with the target segment data structure; and
generate a supply forecast indicating an estimated number of future impressions based upon the reach time series (702).

2. The tangible, non-transitory, computer-readable medium of claim 1, comprising computer-readable instructions that, when executed by one or more processors of one or more computers, cause the one or more computers to:
receive audience data indicative of the universe of audience members (1200) over the periodic intervals for the historical period of time; and
generate a universe data structure (402) associated with an indication of the magnitude of the subset of the universe of audience members (1200) that viewed content of the content provision service for each of the periodic intervals, wherein the universe data structure (402) comprises a hyperloglog, HLL, data structure, generated by applying a hash function to the audience data, the HLL comprising uniformly distributed binary outputs of the hash function.

3. The tangible, non-transitory, computer-readable medium of claim 2, wherein the universe data structure (402) comprises a plurality of HLL data structures, one for each of a plurality of segments of the audience data.

4. The tangible, non-transitory, computer-readable medium of claim 3, comprising computer-readable instructions that, when executed by one or more processors of one or more computers, cause the one or more computers to:
de-duplicate elements of the universe data structure (402), by:
categorizing audience elements into separate HLLs based upon an audience identifier type identifying a corresponding audience member; and
limiting each of the audience elements having a plurality of audience identifier types to one of the separate HLLs, based upon a priority of audience identifier types; and
generate the reach time series (702) using the de-duplicated universe data structure.

5. The tangible, non-transitory, computer-readable medium of claim 4, wherein the priority of audience identifier types comprises:
a prioritization of a content provision service identifier used to access content over a device identifier of an electronic device used to access content.

6. The tangible, non-transitory, computer-readable medium of claim 4, wherein the priority of audience identifier types comprises:
a prioritization of a device identifier of an electronic device used to access content over an internet protocol, IP, address identifier used to access the content.

7. The tangible, non-transitory, computer-readable medium of claim 1, comprising computer-readable instructions that, when executed by one or more processors of one or more computers, cause the one or more computers to:
generate a demand forecast of the target segment, indicating an estimated demand of future impressions corresponding to the target segment;
identify a remaining capacity corresponding to the target segment based upon the demand forecast of the target segment; and
provide the remaining capacity corresponding to the target segment to an order management system, causing the order management system to limit ordering based upon the remaining capacity corresponding to the target segment.

8. The tangible, non-transitory, computer-readable medium of claim 7, comprising computer-readable instructions that, when executed by one or more processors of one or more computers, cause the one or more computers to:
generate the demand forecast, by: recursively calculating a capacity corresponding to the target segment, by introducing an impact of probabilistic placements for other audiences at each recursive step, until each audience in the universe of audience members (1200) is considered.

9. The tangible, non-transitory, computer-readable medium of claim 8, wherein the impact of probabilistic placements for the other audiences is determined based upon a relative demand of each of the other audiences with respect to one another and the target segment.

10. The tangible, non-transitory, computer-readable medium of claim 1, comprising computer-readable instructions that, when executed by one or more processors of one or more computers, cause the one or more computers to:
identify one or more time-dependent trends occurring within a lookback period of time within the reach time series (702); and
forecast the estimated number of future impressions, based upon the one or more time-dependent trends.

11. The tangible, non-transitory, computer-readable medium of claim 10, wherein the lookback period of time comprises a minimum of two years.

12. The tangible, non-transitory, computer-readable medium of claim 1, wherein the periodic intervals comprise a daily interval.

13. A computer-implemented method (300), comprising:
generating (306), via a computer, a target segment data structure indicative of a magnitude of a target segment within a universe of audience members (1200) of a content provision service;
generating (308), via the computer, a reach time series (702) indicating a number of unique impressions of the target segment for each of a set of periodic intervals for a historical period, by intersecting:
a subset of the universe of audience members (1200) that viewed content of the content provision service for each of the periodic intervals; and
the target segment data structure; and
generating (310), via the computer, a supply forecast indicating an estimated number of future impressions based upon the reach time series (702).

14. A system (100), comprising:
a transactional digital forecaster (102), comprising one or more computer processors, configured to:
generate a target segment data structure indicative of a magnitude of a target segment within a universe of audience members (1200) of a content provision service; and
generate a supply forecast indicating an estimated number of future impressions based upon a reach time series (702) indicating a number of unique impressions of the target segment for each of a set of periodic intervals for a historical period, wherein the reach time series (702) is generated by intersecting a subset of the universe of audience members (1200) that viewed content of the content provision service at each of the periodic intervals for the historical period with the target segment data structure.

15. The system (100) of claim 14, the system (100) further comprising a forecast controlled computing device and wherein:
the transactional digital forecaster (102) is configured to cause forecast control of the forecasted controlled computing device, by providing the supply forecast to the forecast controlled computing device, and further configured to generate and provide a demand forecast for the target segment to the forecast controlled computing device; and
the forecast controlled computing device comprises an order management system (116), configured to receive the supply forecast and the demand forecast and limit ordering based upon both the supply forecast and the demand forecast.
